Europäisches Patentamt

European Patent Office

Office européen des brevets

(19)

(11) Veröffentlichungsnummer: **0 185 254 B1**

(12) **EUROPÄISCHE PATENTSCHRIFT**

(45) Veröffentlichungstag der Patentschrift: 05.06.91

(51) Int. Cl.⁵ **A01N 59/24**

(21) Anmeldenummer: 85115409.6

(22) Anmeldetag: 04.12.85

(54) **Verfahren zur Verlängerung der Dormanz von Pflanzen oder Pflanzenteilen.**

(30) Priorität: 04.12.84 DE 3444211

(43) Veröffentlichungstag der Anmeldung:
25.06.86 Patentblatt 86/26

(45) Bekanntmachung des Hinweises auf die
Patenterteilung:
05.06.91 Patentblatt 91/23

(84) Benannte Vertragsstaaten:
AT CH DE FR IT LI

(56) Entgegenhaltungen:
DE-A- 1 642 343
DE-A- 2 737 454
DE-A- 3 150 404
US-A- 2 368 601

(73) Patentinhaber: SKW Trostberg Aktiengesellschaft
Dr.-Albert-Frank-Strasse 32 Postfach
1150/1160
W-8223 Trostberg(DE)

(72) Erfinder: Rieder, Georg Leonhard, Dr.
Traunfeldstrasse 26
W-8221 Stein/Traun(DE)

(74) Vertreter: Weickmann, Heinrich, Dipl.-Ing. et
al
Patentanwälte Dipl.-Ing. H.Weickmann
Dipl.-Phys.Dr. K.Fincke Dipl.-Ing.
F.A.Weickmann Dipl.-Chem. B. Huber Dr.-Ing.
H. Liska Dipl.-Phys.Dr. J. Prechtel Postfach
860820
W-8000 München 86(DE)

**Beschreibung**

Gegenstand der vorliegenden Anmeldung ist ein Verfahren zur Verlängerung der Dormanz von Pflanzen oder Pflanzenteilen sowie eine sichere und problemlose Methode zur Verhinderung von Spätfrostschäden bei Pflanzen.

Die Entwicklung von Pflanzen läuft bekanntermaßen in verschiedenen, deutlich voneinander abgrenzbaren Abschnitten ab, wie z. B. das Keimen von Samen, das Austreiben von mehrjährigen Pflanzen, die Bildung von Blättern und Blüten oder die Bildung von Früchten und Samen. Dieser Entwicklungsablauf ist genetisch festgelegt und wird somit von inneren, sogenannten endogenen Wachstumsfaktoren beeinflußt.

Diese endogenen Wachstumsfaktoren stehen aber in Wechselbeziehung zu äußeren d. h. exogenen Wachstumsfaktoren wie z. B. Licht, Temperatur, Luft, Wasser und Nährstoffen.

Aktiv wachsende Pflanzen sind gegenüber ungünstigen äußeren Wachstumsfaktoren wie z. B. Frost, Hitze oder zu geringem Wasserangebot wenig widerstandsfähig. Zur Erhaltung der Art schützt sich die Pflanze vor solchen für sie fatalen äußeren Bedingungen dadurch, daß die für das Überleben der Pflanze notwendigen Pflanzenteile wie z. B. Samen, Wurzelstöcke, Rhizome, Knollen oder Knospen in einen Ruhezustand, die sogenannte Dormanz übergehen. In diesem Stadium der Dormanz zeigt die Pflanze kein äußerlich sichtbares Wachstum, d. h. es werden keine empfindlichen Pflanzenteile gebildet, welche durch die ungünstigen äußeren Bedingungen geschädigt werden können.

Anfang und Ende und somit die Dauer der Dormanzperiode werden im wesentlichen durch Umweltfaktoren wie z. B. Licht und Temperatur gesteuert.

Die Verlängerung der Dormanz bietet für den praktischen Pflanzenanbau, insbesondere den Obst- und Weinanbau, entscheidende Vorteile. Diese Vorteile sind besonders unter solchen Klimabedingungen von Bedeutung, bei denen nach Beginn des aktiven Wachstums noch mit Frösten zu rechnen ist. Diese Spätfröste, die nicht regelmäßig und jedes Jahr gleich stark auftreten, schädigen bereits ausgetriebene Obstgehölze oder Rebstöcke, was immer mit beträchtlichen Ernteertragsausfällen verbunden ist.

Es hat nicht an Versuchen gefehlt, diese Spätfrostschäden zu verhindern (vgl. hierzu R. I. Weaver: Grape Growing, Seite 47 bis 55 Verlag John Wiley & Sons, New York, 1976). Zu diesen Methoden zum Stand der Technik gehören die sogenannte "Frostberegnung", die Beeinflussung von Kaltluftschichten durch Windgebläse oder die direkte Beheizung der Obstanlagen. Alle diese Maßnahmen, die auf den Schutz bereits ausgetriebener Knospen und Blätter abzielen, sind entweder nur bedingt wirksam oder wegen der hohen Energiekosten unwirtschaftlich.

Es ist deshalb versucht worden, die Spätfrostschäden durch Verlängerung der unempfindlichen Dormanzphase mit Hilfe von Pflanzenhormonen zu verhindern (vgl. R. I. Weaver: Plant Growth Substances in Agriculture, Seite 165-167 Verlag W.H. Freemann & Co., 1972). So wurden beispielsweise Versuche mit natürlichen Pflanzenhormonen wie Gibberellin oder Abszisin oder synthetischen Wachstumsinhibitoren wie Chlorcholinchlorid durchgeführt, die jedoch bisher nicht zum gewünschten Erfolg führten.

Der Erfindung liegt daher die Aufgabe zugrunde, ein Verfahren zur Verlängerung der Dormanz von Pflanzen oder Pflanzenteilen zu entwickeln, welches die genannten Nachteile des Standes der Technik nicht aufweist, sondern trotz unkomplizierter Handhabung eine wirkungsvolle Verlängerung der Dormanzphase ermöglicht.

Diese Aufgabe wird erfindungsgemäß dadurch gelöst, daß man die entsprechenden Pflanzen oder Pflanzenteile vor dem voraussichtlichen Austrieb mit einer wäßrigen Cyanamidlösung behandelt. Es hat sich nämlich überraschenderweise gezeigt, daß durch das erfindungsgemäße Verfahren eine beträchtliche Verlängerung der Dormanzphase möglich ist. Dies war deshalb so überraschend, weil nach dem Stand der Technik gemäß der DE-OS 31 50 404 die Cyanamidlösung genau die gegenteilige Wirkung hat, nämlich die Brechung der Knospendormanz. Dies ist nur damit zu erklären, daß es auf den Zeitpunkt der Behandlung ankommt.

Beim Verfahren gemäß der vorliegenden Erfindung wird die Cyanamidlösung vor dem voraussichtlichen Austrieb auf die zu behandelnden Pflanzen oder Pflanzenteile wie z. B. Knospen, Rhizome, Knollen, Zwiebeln, Wurzelstöcke aufgebracht. Der optimale Behandlungstermin liegt etwa 4 Wochen bis unmittelbar, d. h. etwa 1 Tag vor dem voraussichtlichen Austrieb, wobei der Zeitpunkt der Behandlung entscheidenden Einfluß auf die Verlängerung der Dormanz hat. Je später die Behandlung erfolgt, d. h. je kürzer die Zeitspanne zwischen Behandlung und voraussichtlichem Austrieb ist, umso länger ist die Verzögerung des Austriebs. Im günstigsten Fall kann die Verlängerung der Dormanz bis zu 14 Tagen betragen. Man hat es mit Hilfe des erfindungsgemäßen Verfahrens also nicht nur in der Hand, die Dormanz generell zu verlängern, sondern man kann auch die Zeitdauer der Verlängerung durch den Behandlungszeitpunkt gezielt steuern.

Die wäßrige Cyanamidlösung weist zweckmäßig eine Konzentration von 0,05 bis 10 Gew.-%, vorzugs-

2

weise von etwa 1 bis 3 Gew.-% auf. Die Cyanamidlösung kann mit den üblichen Spritzgeräten ausgebracht werden und besitzt somit den Vorteil einer problemlosen und gut dosierbaren Ausbringung.

Die Menge der eingesetzten Cyanamidlösung wird vorzugsweise so bemessen, daß eine vollständige Benetzung der zu behandelnden Pflanzen oder Pflanzenteile eintritt. Gegebenenfalls können noch Netzmittel, insbesondere Alkylarylpolyglycolether wie z. B. "Citowett" [R] zugesetzt werden, die zweckmäßig in einer Menge von 0,1 bis 1 Gew.-%, bezogen auf die Cyanamidlösung, verwendet werden.

Das erfindungsgemäße Verfahren ist prinzipiell zur Behandlung aller Pflanzen, insbesondere von Obstbäumen und Weinreben geeignet.

Die wesentlichen Vorteile dieses Verfahrens sind die gezielte Steuerung der Verlängerung der Dormanzphase, einfache Handhabung und hohe Wirtschaftlichkeit, da Cyanamid eine wohlfeile Chemikalie darstellt. Diese Vorteile sind die wesentliche Voraussetzung für eine sichere und wirtschaftliche Methode, Ernteausfälle durch Spätfröste zu verhindern bzw. weitgehend zu vermeiden.

Die nachfolgenden Beispiele sollen die Erfindung näher erläutern, ohne sie jedoch darauf zu beschränken.

**Beispiel 1**

Die Rebsorte "Novling" ist im südbadischen Weinanbaugebiet für schlechten Austrieb bekannt. Außerdem treten dort häufig Spätfröste auf, die nach Austrieb zu beträchtlichen Schäden führen können. Nach praktischen Erfahrungen wurde der Austrieb im Versuchsjahr etwa um den 10. Mai erwartet. Die erfindungsgemäße Cyanamidlösung wurde in einer Konzentration von 2,5 Gew.-% am 24. April, also nur 15 Tage vor dem erwarteten Austrieb gespritzt. Die Verspätung des Austriebes betrug etwa 10 Tage, wie aus Tabelle 1 zu ersehen ist.

T a b e l l e   1

Einfluß von Cyanamid auf die Verlängerung der Dormanzperiode der Rebsorte "Nobling", gemessen am Austriebsdatum.

| Variante | Austriebs-datum | Verlängerung der Dormanzperiode |
|----------|-----------------|----------------------------------|
| unbehandelt | 10. Mai | --- |
| 2,5%ige Cyanamid-lösung am 24.04. | 20. Mai | 10 Tage |

**Beispiel 2**

Das Aconcagua Tal in Südamerika ist ein relativ neues Weinanbaugebiet. Zur Zeit des normalen Knospenaustriebes gibt es relativ stark schwankende Tag/Nacht Temperaturen. Während die Mittagstemperatur bis auf über 20°C ansteigen kann, ist es möglich, daß während der Nacht Temperaturen im Bereich des Gefrierpunktes auftreten.

Mit der dort wichtigsten Traubensorte Thompson Seedless wurden Versuche zur Verlängerung der Dormanzperiode angelegt. Eine wäßrige Lösung des Wirkstoffes Cyanamid in einer Konzentration von 2,5 Gew.-% wurde zu mehreren Terminen gespritzt. Der nach Praxiserfahrungen erwartete normale Austrieb sollte am 28. August stattfinden. Demzufolge wurden die Behandlungstermine mit 15 bis 0 Tage vor dem erwarteten Austrieb festgelegt und entsprechend wahrgenommen. Tatsächlich wurden die ersten Anzeichen des Knospenaustriebes, d. h. Schwellen der Knospen und Sichtbarwerden der Haare der ersten Blätter (Baumwollstadium, bzw. "cotton stage") bereits am 28. August beobachtet. Das bedeutet, daß beim spätesten Anwendungstermin der Wirkstoff Cyanamid unmittelbar am Ende der Dormanzperiode gespritzt wurde. Wie aus der Tabelle 2 zu ersehen ist, führte die späte Anwendung zu einer 10-tägigen Verlängerung der Dormanz.

## T a b e l l e 2

Beeinflussung der Verlängerung der Dormanzphase von Weinreben der Sorte Thompson Seedless im Aconcagua Tal.

| Variante | Behandlung | | Austriebs-datum | Verlängerung der Dormanz-periode Tage |
| --- | --- | --- | --- | --- |
| | Datum | Tage vor erwartetem Austrieb | | |
| unbe-handelt | - | - | 28. Aug. | - |
| 2,5% Cyana-mid | 15. Aug. 28. Aug. | 15 0 | 29. Aug. 13. Sept. | 1 10 |

**Ansprüche**

4

1. Verfahren zur Verlängerung der Dormanz von Pflanzen oder Pflanzenteilen, **dadurch gekennzeichnet,** daß man die entsprechenden Pflanzen oder Pflanzenteile vor dem voraussichtlichen Austrieb mit einer wäßrigen Cyanamidlösung behandelt.

2. Verfahren nach Anspruch 1, **dadurch gekennzeichnet,** daß man die Behandlung vier Wochen bis unmittelbar vor dem voraussichtlichen Austrieb vornimmt.

3. Verfahren nach Anspruch 1 oder 2, **dadurch gekennzeichnet,** daß man eine Cyanamidlösung mit einer Konzentration von 0,05 bis 10 Gew.-% verwendet.

4. Verfahren nach den Ansprüchen 1 bis 3, **dadurch gekennzeichnet,** daß man eine Cyanamidlösung mit einer Konzentration von 1 bis 3 Gew.-% verwendet.

5. Verfahren nach den Ansprüchen 1 bis 4, **dadurch gekennzeichnet,** daß man die zu behandelnden Pflanzen bzw. Pflanzenteile mit der Cyanamidlösung vollständig benetzt.

6. Verfahren nach den Ansprüchen 1 bis 5, **dadurch gekennzeichnet,** daß man eine Cyanamidlösung verwendet, die ein Netzmittel in einer Menge von 0,1 bis 1 Gew.-% enthält.

7. Verwendung einer 0,1 bis 10 Gew.-%igen Cyanamidlösung als Mittel zur Verlängerung der Dormanz von Pflanzen und Pflanzenteilen.

## Claims

1. Process for the prolongation of the dormancy of plants or plant parts, characerised in that the appropriate plants or plant parts are treated with an aqueous cyanamide solution before the anticipated sprouting.

2. Process according to claim 1, characterised in that one carries out the treatment 4 weeks to immediately before the anticipated sprouting.

3. Process according to claim 1 or 2, characterised in that one uses a cyanamide solution with a concentration of from 0.05 to 10 wt.%.

4. Process according to claims 1 to 3, characterised in that one uses a cyanamide solution with a concentration of 1 to 3 wt.%.

5. Process according to claims 1 to 4, characterised in that one completely wets the plants or plant parts to be treated with the cyanamide solution.

6. Process according to claims 1 to 5, characterised in that one uses a cyanamide solution which contains a wetting agent in an amount of 0.1 to 1 wt.%.

7. Use of a 0.1 to 10 wt.% cyanamide solution as agent for the prolongation of the dormancy of plants and plant parts.

## Revendications

1. Procédé de prolongation de la dormance de plantes ou de parties de plantes, caractérisé en ce que l'on traite les plantes ou les parties de plantes correspondantes avant la date prévue pour le bourgeonnement, par une solution aqueuse de cyanamide.

2. Procédé selon la revendication 1, caractérisé en ce que l'on effectue le traitement quatre semaines à juste avant la date probable du bourgeonnement.

EP 0 185 254 B1

3. Procédé selon les revendications 1 ou 2, caractérisé en que l'on utilise une solution de cyanamide ayant une concentration de 0,05 à 10 % en poids.

4. Procédé selon les revendications 1 à 3, caractérisé en ce que l'on utilise une solution de cyanamide ayant une concentration de 1 à 3 % en poids.

5. Procédé selon les revendications 1 à 4, caractérisé en ce que l'on mouille complètement les plantes ou parties de plantes à traiter avec la solution de cyanamide.

6. Procédé selon les revendications 1 à 5, caractérisé en ce que l'on utilise une solution de cyanamide qui contient un mouillant dans une quantité de 0,1 à 1 % en poids.

7. Utilisation d'une solution de cyanamide à 0,1 à 10 % en poids comme agent pour la prolongation de la dormance des plantes et des parties de plantes.

6